Europäisches Patentamt

(19) European Patent Office

Office européen des brevets

(11) Veröffentlichungsnummer: **0 111 738**
**B1**

(12) **EUROPÄISCHE PATENTSCHRIFT**

(45) Veröffentlichungstag der Patentschrift:
**17.01.90**

(51) Int. Cl. ⁴: **B 60 R 13/06**

(21) Anmeldenummer: **83111265.1**

(22) Anmeldetag: **11.11.83**

(54) **Abdichtung für Karosserieöffnungen, insbesondere Fensteröffnungen für Schwenkfenster in Kraftfahrzeugen.**

(30) Priorität: **16.12.82 DE 3246577**

(43) Veröffentlichungstag der Anmeldung:
**27.06.84 Patentblatt 84/26**

(45) Bekanntmachung des Hinweises auf die Patenterteilung:
**17.01.90 Patentblatt 90/03**

㊴ Bennante Vertragsstaaten:
**DE FR GB SE**

(56) Entgegenhaltungen:
**DE-A-2 855 050**
**DE-C-698 576**
**DE-C-709 461**
**DE-U-1 992 878**
**DE-U-7 324 520**
**FR-A-2 477 662**
**US-A-2 223 459**
**US-A-3 638 361**
**US-A-4 322 105**

(73) Patentinhaber: **Adam Opel Aktiengesellschaft**
**Bahnhofsplatz 1 Postfach 1560**
**D-6090 Rüsselsheim (DE)**

(72) Erfinder: **Schellsch, Lutz**
**Herderstrasse 27**
**D-6203 Hochheim (DE)**

(74) Vertreter: **Rosenfeld, Jürgen, Dipl. Ing.**
**Adam Opel Ag Patentabteilung Bahnhofsplatz 1**
**Postfach 17 10**
**D-6090 Rüsselsheim (DE)**

EP 0 111 738 B1

**Beschreibung**

Die Erfindung betrifft ein Kraftfahrzeug mit einer ein Schwenkfenster aufweisenden Fensteröffnung.

Eine heute noch weit verbreitete Konstruktion der Fensterabdichtung für Kraftfahrzeug-Schwenkfenster besteht in einem umlaufenden, auf den Karosserieöffnungsflansch aufgebrachten Aufsteckprofil aus PVC oder Gummi mit Metallgerüsteinlage, die für die erforderliche Klemmwirkung sorgt. Hiermit verbunden ist eine Lippe oder ein Schlauch aus weichem Gummi, wie z. B. Moosgummi, die gegen die schwenkbare Glasscheibe abdichtet. Eine solche Konstruktion ist gemäß dem Oberbegriff des Anspruchs 1, z. B. in dem Dokument DE-U-7 324 520 bekannt geworden.

Nun wird üblicherweise der Innenraum von Kraftfahrzeugen mit Verkleidungen aus Pappe oder Kunststoff ausgekleidet. Bei Konstruktionen, bei denen diese Verkleidung bis an die Glasscheibe reicht, erhält die Scheibe oft aus optischen Gründen einen umlaufenden, im Siebdruckverfahren aufgebrachten Farbrand, um den ansonsten von außen sichtbaren Spalt zwischen Verkleidung und Aufsteckprofil abzudecken. Dadurch jedoch, daß das Aufsteckprofil über den Karosserieöffnungsflansch reicht, ist es verhältnismäßig breit. Der Farbrand kann hierdurch ebenfalls optisch übermäßig breit wirken. Außerdem ist es bei Aufsteckprofilen nicht möglich, Zierleisten zu integrieren. Diese müssen als zusätzliche Teile befestigt werden.

Der Erfindung liegt deshalb die Aufgabe zugrunde, eine Fensterabdichtung der angegebenen Gattung zu schaffen, die die erwähnten Nachteile nicht aufweist.

Dies wird erfindungsgemäß dadurch erreicht, daß der Profilkörper zwei durch einen schräg nach außen verlaufenden Steg miteinander verbundene, entgegengesetzt gerichtete Schenkel hat, von denen ein Schenkel starr ausgebildet und außenseitig auf den Karosserieöffnungsflansch mittels eines doppelseitigen Klebebandes oder Kleber festgeklebt ist und als Abdichtungsprofil ein nach außen gerichtete Dichtlippe aufweist und der andere Schenkel in den freien Spalt zwischen der Stirnfläche des Schwenkfensters und dem Karosserieblech verlängert ist und diesen weitgehend bündig überbrückt.

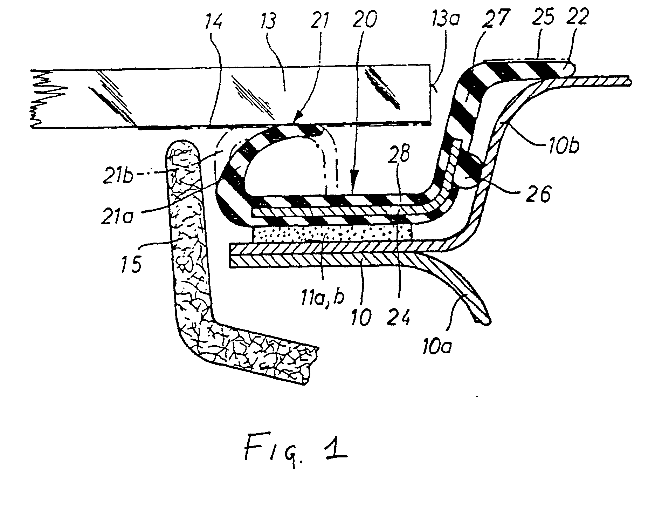

Ein Ausführungsbeispiel ist in der Zeichnung dargestellt. Das Kraftfahrzeug-Schwenkfenster weist einen Karosserieöffnungsflansch 10 auf, der durch Punktschweißen verbundene Blechteile 10a, 10b gebildet ist. Auf den Karosserieöffnungsflansch 10 ist mittels eines doppelseitigen Klebebandes 11a oder eines Klebers 11b der Profilkörper 20 aufgeklebt.

Die Glasscheibe ist mit 13 gekennzeichnet, während der strichpunktiert dargestellte Farbrand mit 14 bezeichnet ist. Vom Fahrzeuginnenraum aus deckt die Verkleidung 5 Karosserieöffnungsflansch und Profilkörper ab.

Der Profilkörper 20 weist zwei durch einen schräg nach außen verlaufenden Steg 27 miteinander verbundene, entgegen gesetzt gerichtete Schenkel 22, 28 und ein Abdichtungsprofil 21 in Form einer Dichtlippe 21a oder alternativ einen schlauchförmigen Hohlwulst 21b auf. Der Profilkörper ist im Bereich der Klebestelle starr ausgebildet, was insbesondere durch eine Metalleinlage 24 oder auch eine härtere Gummimischung erreicht werden kann. Der Schenkel 22 ist in den freien Spalt zwischen Fensterglas-Stirnfläche 13a und Blechteil 10b verlängert. Hierdurch wird ein bündiger Übergang von dem Kraftfahrzeug-Schwenkfenster zur Karosserieaußenhaut erreicht. Der Schenkel 22 kann zur optischen Aufwertung des Fensterbereiches poliert, lackiert oder farblich beschichtet sein, was durch 25 gekennzeichnet ist. Anschläge 26 dienen der Zentrierung des Rahmens bei der Montage und vermeiden metallischen Kontakt zwischen Rahmen und lackierter Karosserie.

**Patentansprüche**

1. Kraftfahrzeug mit einer ein Schwenkfenster aufweisenden Fensteröffnung, welche durch einen zurückspringenden Karosserieöffnungsflansch (10) begrenzt ist, auf dem ein Profilkörper (20) befestigt ist, welcher mit einem Schenkel (22) am Karosserieöffnungsflansch (10) angebracht ist und mit einem Abdichtungsprofil (21) gegen das Schwenkfenster anliegt, *dadurch gekennzeichnet,* daß der Profilkörper (20) zwei durch einen schräg nach außen verlaufenden Steg (27) miteinander verbundene, entgegengesetzt gerichtete Schenkel (22, 28) hat, von denen ein Schenkel (28) starr ausgebildet und außenseitig auf den Karosserieöffnungsflansch (10) mittels eines doppelseitigen Klebebandes (11a) oder Kleber (11b) festgeklebt ist und als Abdichtungsprofil (21) ein nach außen gerichtete Dichtlippe (21a) aufweist und der andere Schenkel (22) in den freien Spalt zwischen der Stirnfläche (13a) des Schwenkfensters (13) und dem Karosserieblech (10b) verlängert ist und diesen weitgehend bündig überbrückt.

2. Kraftfahrzeug nach Anspruch 1, *dadurch gekennzeichnet,* daß das Abdichtungsprofil (21) als schlauchförmiger Hohlwulst (21b) ausgebildet ist.

3. Kraftfahrzeug nach Anspruch 1, dadurch gekennzeichnet, daß der Profilkörper (20) aus Gummi geformt ist und der auf den Karosserieöffnungsflansch (10) geklebte Schenkel (28) eine Metalleinlage (24) aufweist.

4. Kraftfahrzeug nach den Ansprüchen 1 bis 3, *dadurch gekennzeichnet,* daß der Steg (27) durch Anschläge (26) am Karosserieblech (10b) abgestützt ist.

**Claims**

1. Motor vehicle with a swivel window arranged in a window opening which is bordered by a spring-back body opening flange (10) to which is secured a profile body (20) which together with an arm (22) is attached to the body opening flange (10) and which together with a sealing profile (21) rests against the the swivel window, characterised in that the profile body (20) has two oppositely directed arms (22, 28) which are interconnected by means of a web (27) sloping outwards, one arm (28) being rigidly constructed and adhesively fixed to the outside of the body opening flange (10) by means of a doublesided adhesive tape (11a) or an adhesive (11b) and which has an outwardly directed sealing lip (21a) as the sealing profile (2), and the other arm (22) is extended into the free space between the front face (13a) of the swivel window (13) and the sheet metal body (10b) and largely bridges this space to be flush.

2. Motor vehicle according to claim 1, characterised in that the sealing profile (21) is constructed in the form of a tubular hollow bead (21b).

3. Motor vehicle according to claim 1, characterised in that the profile body (20) is formed of rubber and the arm (28) adhesively attached to the body opening flange (10) contains a metal insert (24).

4. Motor vehicle according to the claims 1 to 3, characterised in that the web (27) is supported on the sheet metal of the body (lob) by means of abutments (26).

**Revendications**

1. Véhicule automobile avec une baie présentant une glace pivotante, qui est délimitée dans la carrosserie par une collerette d'ouverture (10) située en retrait, sur laquelle est fixé un corps profilé (20), lequel est appliqué sur la collerette d'ouverture (10) de la carrosserie par une branche (22) et repose contre la glace pivotante par un profil d'étanchéité (21), caractérisé par le fait que le corps profilé (20) a deux branches (22, 28), dirigées en sens opposés, unies par une traverse (27) dirigée obliquement vers l'extérieur, l'une des branches (28) étant rigide et collée côté extérieur sur la collerette d'ouverture (10) de la carrosserie au moyen d'un ruban adhésif (11a) double face ou d'une colle (11b) et présentant, pour profil d'étanchéité (21), une lèvre d'étanchéité (21a) tournée vers l'extérieur, et l'autre branche (22) s'étendant dans l'espace libre entre la face frontale (13a) de la glace pivotante (13) et la tôle (10b) de la carrosserie et franchissant ledit espace essentiellement en affleurement.

2. Véhicule automobile selon la revendication 1, caractérisé par le fait que le profil d'étanchéité (21) a la forme d'un boudin creux tubulaire flexible (21b).

3. Véhicule automobile selon la revendication 1, caractérisé par le fait que le corps profilé (20) est fait de caoutchouc et que la branche (28) collée sur la collerette d'ouverture (10) de la carrosserie présente une couche intermédiaire métallique (24).

4. Véhicule automobile selon les revendications 1 à 3, caractérisé par le fait que la traverse (27) appuie sur la tôle de la carrosserie (10b) par l'intermédiaire de butées (26).

Fig. 1